# EUROPEAN PATENT APPLICATION

(11) **EP 1 892 544 A1**
(43) Date of publication of application: **27.02.2008**
(21) Application number: 07253361.5
(22) Date of filing: 24.08.2007
(51) Int. Cl.: G02B 5/30

(54) **Passive depolariser**

(30) Priority: 25.08.2006 US 823559 P
(71) Applicant: JDS Uniphase Corporation, Milpitas CA 95035 (US)
(72) Inventor: Mceldowney, Scott, Windsor CA 95492 (US); Zieba, Jerry, Santa Rosa CA 95405 (US); Newell, Michael, Santa Rosa, CA 95405 (US)
(74) Representative: McKechnie, Neil Henry

(57) **Abstract**

The present invention relates to a passive depolarizer in an optical system having an image plane. The passive depolarizer includes a patterned half wave plate incorporating a monolithic layer of birefringent material. The monolithic layer includes a plurality of regions having fast axes with at least four different orientations. Accordingly, a polarized beam of light incident into the patterned half wave plate is substantially depolarized at the image plane.

## Description

### TECHNICAL FIELD

The present invention relates generally to depolarizers and to patterned wave plates. More particularly, the invention relates to a passive depolarizer including a patterned half wave plate.

### BACKGROUND OF THE INVENTION

Many optical elements are sensitive to the polarization of light. When such optical elements are used in an optical system, their polarization sensitivity can introduce significant errors. To counteract the undesirable effects of polarization sensitivity, a depolarizer can be used to reduce or attempt to randomize the polarization of light.

For instance, typical diffraction gratings used in spectrometers have inherent polarization sensitivity, i.e. their diffraction efficiency depends on the polarization of light. When operating over a wide range of wavelengths, a spectrometer may use a number of different gratings, each of which has different polarization sensitivity. If the input light is polarized, the outputs from the different gratings will be different. Therefore, the behavior of the spectrometer will also differ depending on which grating is used, leading to measurement errors. By inserting a depolarizer in front of a grating positioned at an image plane of the spectrometer, this problem can be minimized.

As discussed in an article entitled "Analysis of spatial pseudo-depolarizers in imaging systems" by McGuire and Chipman (Optical Engineering, 1990, Vol. 12, pp. 1478-1484), a depolarizer converts a polarized light beam into a light beam made up of a collection of different polarization states. The light beam exiting from an ideal depolarizer would consist of temporally and spatially random polarization states. However, such an ideal depolarizer does not exist. Actual depolarizers provide a light beam made up of a continuum of polarization states in the space, time, or wavelength domains. When these polarization states are superpositioned at an image plane of an optical system, a polarization-scrambled image results. When such a light beam is passed through a polarization analyzer positioned at an image plane and is incident on an optical power meter, no appreciable variation in transmitted power is detected upon changing the orientation of the polarization analyzer.

Many of the conventional depolarizers used in optical systems are based on wave plates (also known as retarders). A wave plate, which typically consists of a layer of birefringent material, can change the relative phase between two orthogonal polarization components of a beam of light. A uniaxial birefringent material is characterized by a single fast axis (also known as an optic axis or an anisotropic axis). A polarization component that is parallel to the fast axis travels through the material more quickly than a polarization component that is perpendicular to the fast axis. In other words, the parallel component experiences a smaller refractive index *n*₁, and the perpendicular component a larger refractive index *n*₂. The birefringence Δ*n* of the material is defined as Δ*n* = n₂ - *n*₁*.*

If the wave plate has an appropriate thickness, a phase shift can result between the two orthogonal polarization components of a light beam. For a wave plate with a birefringence Δ*n* and a thickness *d*, the phase shift Γ for a light beam of wavelength λ is given by Γ = (2πΔ*nd*)/λ.

For example, the thickness of a half wave plate is chosen to produce a phase shift of a half wavelength (π) or some multiple of a half wavelength ((2*m* + 1)π, where *m* is an integer), such that *d* = λ(2*m* + 1)/(2Δ*n*). When a linearly polarized light beam is incident on a half wave plate, the light beam exiting the half wave plate is also linearly polarized, but its polarization state is oriented at an angle to the fast axis that is twice that of the polarization state of the incident beam. Thus, a half wave plate can act as a polarization-state "rotator".

One type of conventional depolarizer is a Lyot depolarizer, which consists of two parallel wave plates of birefringent material, with thicknesses in a 2:1 ratio. The wave plates are stacked with their fast axes oriented at 45° with respect to one another. Variations on this device are described in U. S. Patents Nos. 6,667,805; 7,099,081; and 7,158,229 to Norton, et al., for example. Other types of conventional depolarizers incorporate wedge-shaped wave plates. A Hanle depolarizer consists of two wedges, at least one of which is of birefringent material. A Cornu depolarizer consists of two wedges of birefringent material, with their fast axes oriented in opposite directions. Variations on these devices are described in U. S. Patent No. 4,198,123 to Kremen, U. S. Patent No. 6,498,869 to Yao, U. S. Patent No. 6,744,506 to Kaneko, et al., U. S. Patents Nos. 6,819,810 and 7,039,262 to Li, et al., and U. S. Patent Application No. 2007/0014504 to Fiolka, for example.

U. S. Patent No. 6,498,869 to Yao also discloses a depolarizer fabricated from a large number of crystalline chips of birefringent material. The chips are quarter wave plates, and their fast axes are randomly oriented in a plane. A similar device, in this case for radially polarizing a beam of polarized light, is disclosed in U. S. Patents Nos. 6,191,880; 6,392,800; and 6,885,502 to Schuster. The Schuster radial polarizer includes a plurality of facets of birefringent material. The facets are half wave plates, and their fast axes are arranged in various patterns in a plane.

An active depolarizer, which includes a half wave plate and means for rotating the half wave plate, is described in U. S. Patent No. 5,028,134 to Bulpitt, et al.

All of the above-mentioned devices have two or more components. The fabrication of such multi-component devices is very expensive, limiting their application. A passive, monolithic depolarizer, which is simpler and easier to produce, is desired for optical systems. One possibility is a depolarizer based on a patterned wave plate. Patterned wave plates, which have a spatially variant fast-axis orientation, have been described in the prior art, but none of the disclosed devices is a depolarizer.

An active polarization converter including an electro-optic crystal and means for applying an electric field to the crystal is described in U. S. Patent No. 3,617,934 to Segre. In this device, the application of an electric field reversibly converts the crystal into a patterned half wave plate.

U. S. Patent No. 5,548,427 to May describes a patterned half wave plate with alternating regions having two different fast-axis orientations, for use in a switchable holographic device. Patterned wave plates for use as polarization compensators for liquid-crystal displays (LCDs) are disclosed in U. S. Patent No. 7,023,512 to Kurtz, et al. and U. S. Patent No. 7,061,561 to Silverstein, et al. In these devices, the pattern of fast-axis orientation of the wave plate correlates with that of an LCD. U. S. Patent No. 6,055,103 to Woodgate, et al. discloses a patterned half wave plate with alternating regions having two different fast-axis orientations, for use as a polarization-modulating optical element in a three-dimensional (3D) display. Similarly, U. S. Patent No. 5,861,931 to Gillian, et al. discloses a patterned wave plate with alternating regions having two different rotation directions, for use as a polarization-rotating optical element in a 3D display.

An object of the present invention is to overcome the shortcomings of the prior art by providing a depolarizer that can minimize the undesirable effects of polarization sensitivity in optical systems. Unlike conventional depolarizers, the depolarizer of the present invention is passive and monolithic. It includes a half wave plate with a pattern of fast-axis orientation selected for substantially depolarizing a polarized beam of light at an image plane of an optical system.

### SUMMARY OF THE INVENTION

Accordingly, the present invention relates to a passive depolarizer for use in an optical system having an image plane, comprising a patterned half wave plate having an entry surface and an opposing exit surface, wherein the patterned half wave plate comprises a monolithic layer of birefringent material, wherein the monolithic layer comprises a plurality of regions having respective fast axes, and wherein the fast axes have at least four different orientations within a cross section of the monolithic layer parallel to the entry surface, such that a polarized beam of light launched into the entry surface is substantially depolarized at the image plane.

### BRIEF DESCRIPTION OF THE DRAWINGS

The invention will be described in greater detail with reference to the accompanying drawings which represent preferred embodiments thereof, wherein:

Figure 1 is a schematic illustration of a side view of a patterned half wave plate in an optical system having an image plane;

Figure 2 is a schematic illustration of a cross section of a monolithic layer of birefringent material, defining a fast-axis orientation, a reference axis, and location coordinates;

Figure 3 is a schematic illustration of a cross section of a monolithic layer of birefringent material, with a pattern of fast-axis orientation according to θ = aφ + b with a = 2 and b = 0; and

Figure 4 is a schematic illustration of a cross section of a monolithic layer of birefringent material, with a pattern of fast-axis orientation according to θ= c*x* + d with c = 360° and d = 0.

### DETAILED DESCRIPTION

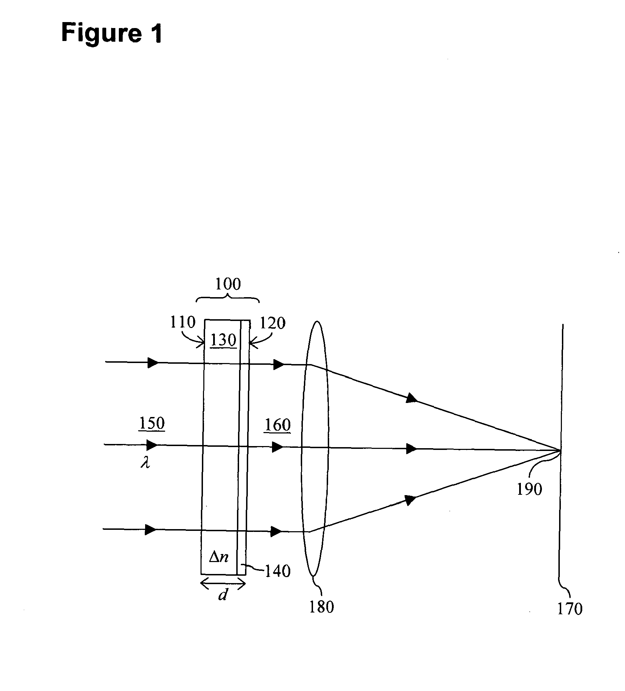

With reference to Figure 1, the present invention provides a depolarizer including a patterned half wave plate 100. The patterned half wave plate 100 has an entry surface 110 and an exit surface 120, and includes a monolithic layer 130 of birefringent material. Preferably, the patterned half wave plate 100 may consist of a monolithic layer 130 of birefringent material, or may also include an optional photo-alignment layer 140, which may be adjacent to the entry surface 110 or the exit surface 120.

The ideal thickness d of the patterned half wave plate 100 may be determined, as described above, on the basis of the average wavelength λ of the incident light beam 150 and the birefringence Δ*n* of the birefringent material of the monolithic layer 130. The incident light beam 150 may be linearly or elliptically polarized and, preferably, has an average wavelength of about 400 to 2000 nm. The birefringent material, preferably, has a birefringence of about 0.05 to 0.5. The actual thickness of the monolithic layer 130 is, preferably, close to the ideal value (within about 10 %).

The entry surface 110 and the exit surface 120 of the half wave plate 100 are, preferably, substantially planar. The polarized light beam 150 launched into the entry surface 110, via an input port (not shown) and optional optical elements (such as a collimating lens; not shown) is, preferably, normal to the entry surface 110. Accordingly, the light beam 160 exiting the half wave plate 100 is made up of a plurality of different polarization states. When these polarization states are superpositioned at an image plane 170 of an optical system, via a focusing lens 180 and optional optical elements (not shown), the image 190 will be substantially depolarized.

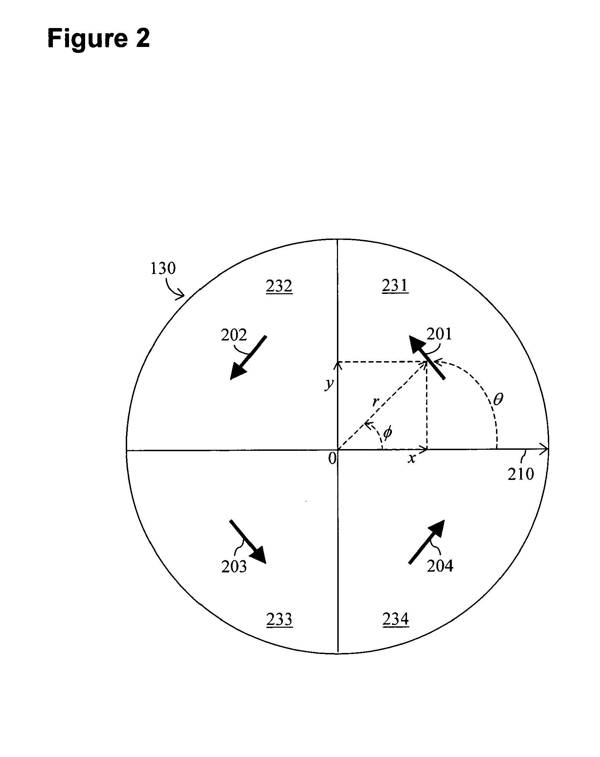

An important feature of the present invention is that the patterned half wave plate 100 incorporates a monolithic layer 130 including a plurality of regions having fast axes with different orientations. For instance, the monolithic layer 130 may comprise a plurality of circular sectors or a plurality of parallel sections having different fast-axis orientations. As illustrated in Figure 2, the orientation 201 of each fast axis is characterized by an in-plane angle θ within a range of 0 to 360° with respect to a reference axis 210 within a cross section of the monolithic layer 130 parallel to the entry surface 110; the positive angle direction is defined as counterclockwise. The monolithic layer 130 illustrated in Figure 2 has four regions 231, 232, 233, and 234 (each a circular sector) having four different fast-axis orientations 201, 202, 203, and 204.

It is desired that the fast axes have at least four different orientations within a cross section of the monolithic layer 130 parallel to the entry surface 110. Preferably, the fast axes have at least eight different orientations. In some instances, the fast axes may have as many as 48 or more different orientations. In effect, the orientations of the fast axes may vary continuously. Such a continuous variation of fast-axis orientation may be advantageous to reduce unwanted diffraction effects.

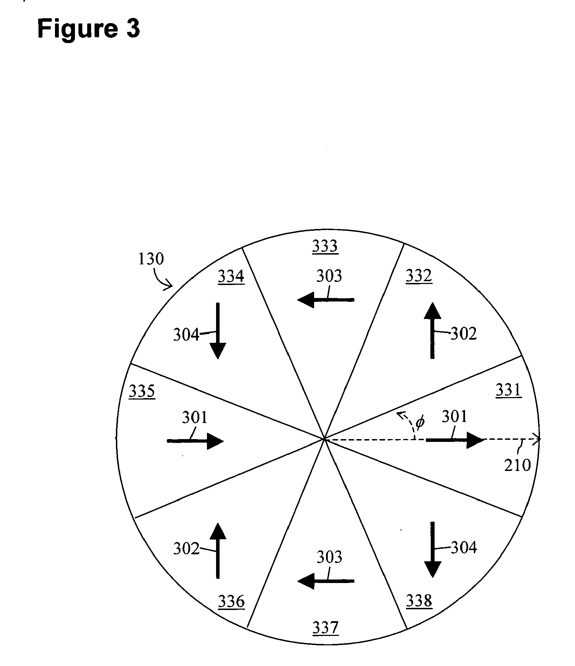

Preferably, the orientations of the fast axes vary in a regular pattern. The pattern may arise from a linear variation of the in-plane angle with respect to a location coordinate within a cross section of the monolithic layer 130 parallel to the entry surface 110. As shown in Figure 2, the location coordinate may be a polar coordinate, i.e. a radial coordinate *r* or an azimuthal angle φ; the azimuthal angle is defined as a counterclockwise angle from the reference axis 210. For instance, the in-plane angle θ may vary linearly with the azimuthal angle φ according to θ= aφ + b, where a is the slope, and b is the in-plane angle at φ = 0. A cross section of a monolithic layer 130 with a pattern of fast-axis orientation generated with a = 2 and b = 0 is illustrated in Figure 3. Eight different regions 331, 332, 333, 334, 335, 336, 337, and 338 (each a circular sector) having four different fast-axis orientations 301, 302, 303, and 304 are included in the illustrated monolithic layer 130.

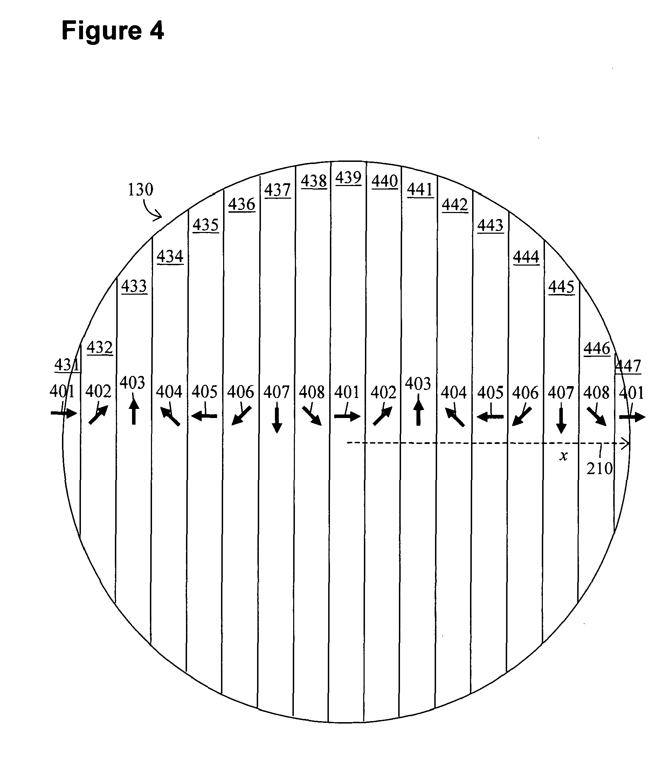

Alternatively, the in-plane angle may vary linearly with respect to a Cartesian coordinate, i.e. an *x* or *y* coordinate, within a cross section of the monolithic layer 130 parallel to the entry surface 110, as shown in Figure 2; the x axis is equivalent to the reference axis 210, and the length of the *x* axis is normalized to 1. For instance, the in-plane angle θ may vary linearly with the x coordinate according to θ = c*x* + d, where c is the slope, and d is the in-plane angle at *x* = 0. A cross section of a monolithic layer 130 with a pattern of fast-axis orientation generated with c = 360° and d = 0 is illustrated in Figure 4. The illustrated monolithic layer 130 includes 17 regions 431, 432, 433, 434, 435, 436, 437, 438, 439, 440, 441, 442, 443, 445, 446, and 447 (each a parallel section) having eight different fast-axis orientations 401, 402, 403, 404, 405, 406, 407, and 408.

Certainly, other patterns of fast-axis orientation could be generated with different choices of a (preferably, a ≥ 1) and b, or c (preferably, c ≥ 180°) and d. Other patterns could also be generated with a different choice of location coordinate as variable. Furthermore, the number of regions and the number of different orientations of the fast axes within the monolithic layer 130 may also be modified. For instance, the fast-axis orientation could, effectively, vary continuously within the monolithic layer 130 according to any such pattern.

For a polarized light beam 150 incident on the entry surface 110, different areas in the beam will have their polarization state "rotated" by different amounts as they pass through different areas in the patterned half wave plate 100, depending on the orientation of the fast axis at each area. Thus, the device acts as spatial depolarizer that converts a polarized light beam 150 into a light beam 160 having a plurality of different polarization states within its cross section. If the incident light beam 150 is linearly polarized, the exiting light beam 160 will consist of a plurality of linearly polarized states. If the incident light beam 150 is elliptically polarized, the exiting light beam 160 will consist of a plurality of elliptically polarized states. If the incident light beam 150 is depolarized, the exiting light beam 160 will also be depolarized. Therefore, a partially polarized light beam 150 may also be depolarized by the patterned half wave plate 100.

The patterned half wave plate 100 may be fabricated using a photo-alignment method, with ultraviolet (UV) light, that is similar to the methods disclosed in U. S. Patent No. 5,861,931 to Gillian, et al., U. S. Patent No. 6,055,103 to Woodgate, et al., U. S. Patent No. 7,061,561 to Silverstein, et al., and a paper entitled "Photo-Aligned Anisotropic Optical Thin Films" by Seiberle, et al. (SID International Symposium Digest of Technical Papers, 2003, Vol. 34, pp. 1162-1165), for instance. All the above-mentioned documents are incorporated herein by reference.

As a first step in such a method, a photo-alignment layer 140 is created, as part of the patterned half wave plate 100. A photo-polymerizable material is applied to a substrate, typically a glass plate. The photo-polymerizable material is then irradiated with linearly polarized UV light to provide a directional alignment within the resulting photo-alignment layer 140. Preferably, a photo-polymerizable prepolymer is used as the photo-polymerizable material, and the resulting photo-alignment layer 140 is composed of a photo-polymerizable polymer. As a second step, a cross-linkable material is applied over the photo-alignment layer 140 and is aligned according to the directional alignment of the photo-alignment layer 140. The cross-linkable material is then cross-linked through exposure to UV light to produce the monolithic layer 130 of birefringent material, as part of the patterned half wave plate 100. Preferably, a liquid-crystal prepolymer is used as the cross-linkable material, and the resulting monolithic layer 130 of birefringent material is composed of a liquid-crystal polymer. Suitable photo-polymerizable prepolymers and liquid-crystal prepolymers are available from Rolic Technologies Ltd. (Allschwil, Switzerland).

An alignment pattern may be formed in the photo-alignment layer 140 by varying the polarization state of the linearly polarized UV light in a pattern during the creation of the layer. As discussed by Seiberle, et al., such alignment patterns may be generated by using photomasks, alignment masters, laser scanning, or synchronized movement of the linearly polarized UV light beam and the substrate. After application of the cross-linkable material onto the photo-alignment layer 140 and subsequent cross-linking, the resulting monolithic layer 130 of birefringent material will have fast axes with orientations that vary in a pattern corresponding to the alignment pattern.

For example, the monolithic layer 130, which includes a plurality of regions with different fast-axis orientations, may be produced from a photo-alignment layer 140 created by a series of exposures of the photo-polymerizable material to linearly polarized UV light through an appropriate number of patterned photomasks. Alternatively, a continuous variation of fast-axis orientation within the monolithic layer 130 may be achieved by using a photo-alignment layer 140 created by exposing the photo-polymerizable material to linearly polarized UV light through a slit, while moving the substrate in an appropriate pattern.

## Claims

1. A passive depolarizer for use in an optical system having an image plane, comprising:
a patterned half wave plate having an entry surface and an opposing exit surface,
wherein the patterned half wave plate comprises a monolithic layer of birefringent material,
wherein the monolithic layer comprises a plurality of regions having respective fast axes, and
wherein the fast axes have at least four different orientations within a cross section of the monolithic layer parallel to the entry surface, such that a polarized beam of light launched into the entry surface is substantially depolarized at the image plane.

2. A passive depolarizer as in claim 1, wherein the patterned half wave plate consists of a monolithic layer of birefringent material.

3. A passive depolarizer as in claim 1, wherein the entry and exit surfaces are substantially planar.

4. A passive depolarizer as in claim 1, wherein the monolithic layer comprises a plurality of circular sectors having respective fast axes.

5. A passive depolarizer as in claim 1, wherein the monolithic layer comprises a plurality of parallel sections having respective fast axes.

6. A passive depolarizer as in claim 1, wherein the fast axes have at least eight different orientations within a cross section of the monolithic layer parallel to the entry surface.

7. A passive depolarizer as in claim 1, wherein the orientations of the fast axes vary continuously.

8. A passive depolarizer as in claim 1, wherein the orientations of the fast axes vary in a regular pattern.

9. A passive depolarizer as in claim 8, wherein the orientations of the fast axes are each **characterized by** an in-plane angle within a range of 0 to 360 degrees with respect to a reference axis within the cross section, and wherein the in-plane angle varies linearly with respect to a location coordinate within the cross section.

10. A passive depolarizer as in claim 9, wherein the location coordinate is a polar coordinate.

11. A passive depolarizer as in claim 9, wherein the location coordinate is a Cartesian coordinate.

12. A passive depolarizer as in claim 1, wherein the monolithic layer of birefringent material is composed of a liquid-crystal polymer.

13. A passive depolarizer as in claim 12, wherein the patterned half wave plate further comprises a photo-alignment layer.

14. A passive depolarizer as in claim 13, wherein the photo-alignment layer is composed of a photo-polymerizable polymer.

15. A passive depolarizer as in claim 13, wherein the patterned half wave plate was photo-aligned with ultraviolet light.
